# FASCICULE DE BREVET EUROPEEN

(11) **EP 3 792 167 B1**
(45) Date de publication et mention de la délivrance du brevet: **25.06.2025**
(21) Numéro de dépôt: 20194462.6
(22) Date de dépôt: 03.09.2020
(51) Int. Cl.: B62H 3/12, B60P 3/075, B61D 37/00, B61D 45/00

(54) **DISPOSITIF DE RANGEMENT POUR VÉLOS, ET VOITURE FERROVIAIRE, TELLE QU'UN WAGON, COMPORTANT UN DISPOSITIF DE RANGEMENT POUR VÉLOS DE CE TYPE**
VORRICHTUNG ZUM VERSTAUEN FÜR FAHRRÄDER, UND SCHIENENFAHRZEUG WIE BEISPIELSWEISE WAGGON, DAS EINE VERSTAUVORRICHTUNG FÜR FAHRRÄDER VON DIESEM TYP UMFASST
STORAGE DEVICE FOR BICYCLES, AND RAILWAY CAR, SUCH AS A CARRIAGE, COMPRISING A STORAGE DEVICE FOR BICYCLES OF THIS TYPE

(30) Priorité: 12.09.2019 FR 1910068
(43) Date de publication de la demande: 17.03.2021
(73) Titulaire: SNCF Voyageurs, 93200 Saint-Denis (FR)
(72) Inventeur: DUMORTIER, Robert, 72000 LE MANS (FR); DUMORTIER, Anne-Laure, 72000 LE MANS (FR)
(74) Mandataire: IPAZ

(56) Documents cités:
- DE-A1- 19 539 788
- DE-A1- 3 110 640
- DE-U1- 8 131 422
- DE-U1- 9 104 041
- ES-A2- 2 433 114
- FR-A1- 3 058 981
- JP-A- 2019 038 362
- KR-B1- 100 936 686
- US-A- 626 535
- US-A1- 2010 163 503
- US-A1- 2019 135 362
- US-B1- 7 093 724

## Description

La présente invention concerne un dispositif de rangement pour vélo ainsi qu'une voiture ferroviaire, tel qu'un wagon, comportant un tel dispositif de rangement pour vélos. Elle concerne également un véhicule ferroviaire comprenant une telle voiture.

Le domaine de l'invention est le domaine des dispositifs de rangement de vélos, en particulier pour des installations en extérieur, en intérieur dans des locaux dédiés ainsi que dans des véhicules ferroviaires, tels que des trains ou des trams.

### Etat de la technique

Actuellement, dans les véhicules ferroviaires, les dispositifs de rangement et accroches vélos sont de deux types : les dispositifs de rangements verticaux et les dispositifs de rangements horizontaux.

Un dispositif de rangement horizontal permet de ranger le vélo qui s'étend avec son axe longitudinal dans un plan horizontal, les deux roues reposant généralement au sol. Le rangement horizontal est généralement le plus utilisé dans les parcs de stationnement aménagés pour les vélos ainsi que dans les transports.

Un tel dispositif est généralement constitué de supports fixés sur une poutre horizontale dans les parcs de stationnement, par exemple, un mur ou une paroi latérale de l'habitacle d'une voiture ferroviaire, formant des guides pour loger la roue avant du vélo. De tels dispositifs présentent l'avantage d'offrir une mise en place du vélo relativement facile pour les utilisateurs. Cependant, la surface au sol occupée et l'encombrement résultant sont trop importants par rapport au nombre de vélos pouvant être rangés efficacement. On a proposé des systèmes qui cherchent à optimiser l'espace et qui sont des systèmes d'attache par sangle de vélo les uns à côté des autres mais se pose alors le problème d'accéder au premier vélo installé alors que les suivants reposent contre lui.

Dans DE 10 2010 005 689, on a proposé un dispositif de fixation de la roue avant d'un vélo, le long de la paroi longitudinale d'une voiture ferroviaire. Ce dispositif comporte un moyen de fixation sur la partie supérieure de la roue du vélo, ce moyen de fixation est en outre monté pivotant sur un support de manière à permettre la mise en place du vélo, non plus perpendiculairement à la paroi longitudinale mais en formant un angle inférieur à 90° avec celle-ci. Un tel dispositif permet donc d'occuper moins d'espace dans la voiture ferroviaire, le ou les vélos ainsi accrochés étant rabattus le long de la paroi longitudinale de la voiture. Cependant, lorsque plusieurs vélos sont ainsi rangés adjacents les uns aux autres et rabattus contre la paroi, ils se trouvent rabattus également au moins en partie les uns sur les autres, ce qui nécessite souvent de manipuler un ou plusieurs vélos lorsqu'on souhaite récupérer le premier rangé.

Si on sépare les vélos, il faut prévoir des espaces de manœuvre et d'accès à chaque vélo indépendamment ce qui augmente encore le besoin d'espace au sol.

Les dispositifs de rangements verticaux présentent l'avantage d'occuper une moins grande surface au sol. Ainsi, un dispositif de rangement vertical (axe longitudinal du vélo s'étendant à la verticale) peut être constitué d'au moins deux éléments disposés sur une paroi longitudinale de l'habitacle d'une voiture ferroviaire : un moyen de suspension tel qu'un crochet disposé en hauteur venant s'insérer dans la roue avant du vélo lorsque celui-ci a son axe longitudinal en position verticale, et un guide roue, positionné plus bas par rapport au crochet, pour maintenir la roue arrière et éviter le basculement du vélo. Le crochet peut également être fixé sur le plafond de la voiture.

On connaît ainsi par US-B-10,266,094 un dispositif de fixation d'un vélo constitué d'un crochet suspendu au plafond d'une voiture ferroviaire et d'un dispositif de maintien de la roue arrière du vélo une fois celui-ci suspendu. Ce dispositif de maintien est escamotable entre une position d'utilisation et une position de non utilisation et peut avantageusement être monté sur la face du dessous d'un strapontin, de sorte que le dispositif est utilisable lorsque le strapontin est relevé ou encore sur une paroi du véhicule entre deux rangées de siège s'étendant perpendiculairement à cette paroi, ces deux rangées délimitant ainsi un espace de rangement vertical. Un tel dispositif de rangement permet donc lorsqu'il n'y a pas de vélos à ranger de laisser un usager s'asseoir sur le strapontin.

Cependant, un dispositif de rangement vertical de ce type nécessite d'abord de positionner le vélo perpendiculairement à la paroi latérale du train, comme pour un rangement à l'horizontal, ce qui n'est pas ergonomique pour l'utilisateur car il doit appliquer une rotation au vélo dans l'habitacle, ce qui n'est pas toujours aisé.

Ainsi, pour les rangements verticaux, les manœuvres sont un peu complexes car l'utilisateur monte avec son vélo dans le véhicule, doit tourner une première fois à 90° pour s'engager dans la salle voyageurs ou l'espace réservé aux vélos, puis une nouvelle fois à 90° pour se positionner face à l'accroche vélo et enfin le soulever pour l'accrocher. Souvent, la dernière manœuvre à 90° et le soulèvement du vélo doivent se faire en même temps du fait de l'espace exigüe des voitures de train par rapport à la longueur d'un vélo.

Cette position verticale permet donc d'optimiser l'espace, classiquement deux fois plus de vélos en position verticale qu'en position horizontale pour une même longueur occupée mais nécessite des manœuvres de mise en place pas toujours simples à réaliser pour l'usager.

On a proposé dans DE-A-41 19 403 un dispositif de rangement permettant une mise en œuvre plus aisée du rangement. Ainsi, un montant vertical installé le long d'une paroi du véhicule porte un système de maintien de la roue avant d'un vélo et à l'aide d'un système de glissières, poulies, câbles et poignée de traction, le système de maintien est hissé jusqu'à une certaine hauteur de sorte que le vélo se trouve dans une position intermédiaire oblique entre une position horizontale et une position verticale de rangement. Le vélo ainsi rangé peut également être en position rabattue par rapport à la paroi. Un tel dispositif s'il permet une mise en position oblique du vélo plus simple à mettre en œuvre, n'offre pas un gain de surface suffisant.

Le document JP2019038362 décrit un dispositif d'accrochage d'un vélo comportant un montant vertical pourvu d'un moyen de suspension, prévu dans la partie centrale du montant vertical et de moyens de blocage en partie basse du montant, formés par le rail qui constitue le montant. Ce document divulgue un dispositif de rangement de vélo selon le préambule de la revendication 1.

Le document ES2433114 décrit une colonne universelle suspendue depuis le plafond d'une voiture ferroviaire et qui peut porter des sièges ou des vélos. Dans ce dernier cas, la colonne comporte un moyen de suspension pour la roue avant du vélo et des moyens de blocage de la roue arrière.

Le document KR100936686 décrit un casier de rangement dans lequel sont installés des moyens de suspension et de maintien du vélo dans un plan vertical. Le document DE19539788 décrit également un montant vertical permettant le maintien du vélo dans un plan vertical à l'aide d'un crochet de suspension et de moyens de maintien inférieurs.

Le document US626535 décrit un dispositif permettant de positionner un vélo dans un plan vertical en retenant la roue avant et en bloquant la roue arrière.

Le document DE9104041 décrit un wagon pourvu de rayonnages de rangement pour des vélos.

Les documents US7093724, US2010/163503, US2019/135362, FR3058981, DE8131422 et DE3110640 décrivent d'autres dispositifs de rangement de vélo.

La présente invention a donc pour but de pallier les inconvénients des dispositifs existants en proposant un dispositif de rangement pour les vélos, simple à mettre en œuvre et à utiliser, notamment dans des véhicules de transports tels que tramways, ou trains.

Un autre but de l'invention est de proposer une voiture ferroviaire comportant un dispositif de rangement de vélo selon l'invention permettant un gain de place.

Un autre but de l'invention est de proposer un dispositif de rangement de vélo pouvant également permettre le rangement et la fixation d'autres objets de mobilité urbaine.

### Exposé de l'invention

Afin de pallier les inconvénients cités, l'invention concerne un dispositif de rangement de vélo selon l'objet de la revendication 1. Des modes de réalisation particuliers de l'invention sont définis dans les revendications dépendantes.

Ainsi de manière avantageuse, le dispositif offre un rangement vertical pouvant être installé facilement, et sans que ce dispositif de rangement n'occupe trop d'espace, l'encombrement étant limité à l'espace occupé par le montant vertical et le vélo qu'il porte.

Selon une forme de réalisation préférée, les moyens de maintien comprennent des moyens de suspension positionnés dans la partie supérieure du montant et sur lesquels est engageable une roue d'un vélo qui se retrouve alors suspendu et s'étend verticalement, ainsi que des moyens de blocage positionnés en partie inférieure du montant, pour bloquer l'autre roue et retenir ledit vélo dans le plan horizontal.

De préférence, ces moyens de blocage forment un logement de retenue dans lequel la roue est insérée, lorsque le vélo est en position verticale, suspendu.

Selon l'invention, le dispositif de rangement présente une surface plane définissant un deuxième plan vertical, de préférence oblique ou perpendiculaire au premier plan vertical dans lequel peut s'étendre un vélo. Ce deuxième plan vertical permet de servir de support pour le rangement d'autres objets.

A cet effet, le montant vertical du dispositif présente deux montants s'étendant transversalement dans un même plan vertical, de préférence parallèles l'un à l'autre, depuis le montant vertical pour définir entre eux la surface plane formant le deuxième plan vertical.

Selon un premier mode de réalisation de l'invention, le montant du dispositif de rangement est constitué d'un mât s'étendant verticalement depuis un socle et sur lequel sont montés en partie haute du mât, les moyens de suspension et en partie basse du mât les moyens de blocage.

Un ou plusieurs de ces dispositifs peuvent donc être installés, dans les rues, par exemple le long de bâtiments, ou sous forme de parcs de stationnement dans des espaces dédiés, par exemple près des gares, de bâtiments publiques, bureaux, etc. De préférence, le socle est fixé au sol ou suffisamment lesté pour éviter tout risque de basculement du dispositif lorsqu'un vélo est installé dessus.

Le dispositif peut également être installé dans des locaux publics ou privés et peut alors être fixé à la fois au sol et au plafond de manière à s'étendre de manière fixe dans ce local tel qu'un garage à vélo, un garage d'habitation privée, etc., entre le sol et le plafond de l'habitacle.

Le mât permet avantageusement de mettre en place des dispositifs antivols sur le vélo pour sécuriser le rangement de celui-ci.

Selon un deuxième mode de réalisation de l'invention, le montant du dispositif de rangement est constitué d'un montant en forme de U, dont l'âme centrale s'étend verticalement et les extrémités des branches sont destinées à être fixées sur une paroi verticale d'accueil tel qu'un mur, une paroi, une cloison.

Dans cette forme de réalisation, les branches du montant en forme de U constituent les deux montants s'étendant transversalement et définissent entre elles la surface plane sur au moins une partie de la hauteur, formant le deuxième plan vertical.

De plus, lorsque le dispositif de rangement selon l'invention est implanté à proximité d'une surface verticale tel qu'un mur, une cloison, l'orientation des moyens de maintien par rapport à la surface permet de positionner le vélo dans un plan vertical qui peut être choisi, par exemple parallèle, oblique ou perpendiculaire par rapport à cette surface. On peut alors proposer des installations de rangement, par exemple, en épi dans un parc de stationnement pour vélo.

L'invention a également pour objet une voiture ferroviaire selon l'objet de la revendication 7.

Ainsi de manière avantageuse, le dispositif de rangement de vélo permet de maintenir celui-ci dans un plan vertical ce qui permet de limiter l'encombrement dans l'habitacle de la voiture, tout en offrant la possibilité que, lorsque le dispositif de rangement n'est pas utilisé, le montant vertical puisse servir de barre de maintien pour les voyageurs se trouvant dans la voiture. Ainsi, une voiture selon l'invention offre un espace pouvant être dédié au rangement des vélos tout en étant également un espace dans lequel peuvent se trouver des voyageurs même lorsque les dispositifs de rangement sont utilisés, car ils servent de barres de maintien pour lesdits voyageurs.

De préférence, les moyens de maintien portés par le montant vertical sont orientés dans l'habitacle pour positionner le vélo dans un plan vertical parallèle, oblique ou perpendiculaire par rapport à une paroi latérale dudit habitacle.

De manière préférée, les moyens de maintien comprennent des moyens de suspension positionnés dans la partie supérieure du montant et sur lesquels est engageable une roue d'un vélo qui se retrouve alors suspendu et s'étend verticalement, ainsi que des moyens de blocage, positionnés en partie inférieure du montant, pour bloquer l'autre roue et retenir ledit vélo dans le plan horizontal.

De manière avantageuse, ces moyens de maintien permettent donc de maintenir le vélo en position verticale par suspension en partie haute et par blocage en partie basse, évitant ainsi que le vélo suspendu ne se balance pendant le déplacement de la voiture ferroviaire.

De préférence, les moyens de maintien peuvent être montés pivotant autour du montant vertical, en particulier les moyens de blocage en partie basse pour les escamoter en cas de non utilisation et éviter qu'ainsi des usagers ne se blessent avec, lorsque le montant vertical est utilisé en tant que barre de maintien.

Les moyens de maintien permettent donc de définir un premier plan vertical dans lequel s'étend le vélo et leur orientation par rapport à une paroi de l'habitable, de préférence la paroi latérale longitudinale, permet de définir que ce plan vertical de rangement puisse être parallèle, perpendiculaire ou oblique par rapport à cette paroi.

L'orientation de ces moyens de maintien par rapport à une paroi de la voiture permet de définir l'espace occupé par le rangement des vélos par rapport à l'espace disponible dans l'habitacle. Il est alors possible de prévoir une pluralité de configurations d'installation de ces dispositifs de rangement dans une voiture. De plus, le montant vertical sert avantageusement de barre de maintien même lorsque le dispositif de rangement est utilisé ce qui offre l'avantage d'avoir ainsi une voiture où l'installation de ces dispositifs de rangement n'empêche pas le transport de voyageurs dans la même voiture.

Selon l'invention, le dispositif de rangement présente une surface plane définissant un deuxième plan vertical, de préférence oblique ou perpendiculaire au premier plan vertical et, de préférence également oblique ou perpendiculaire par rapport à la paroi latérale de l'habitacle.

Ce deuxième plan vertical permet de servir de support pour le rangement d'autres objets. Ce deuxième plan vertical peut notamment permettre de délimiter entre deux dispositifs de rangement un espace également de rangement, par exemple pour loger des bagages encombrants.

Selon un premier mode de réalisation de l'invention, le montant du dispositif de rangement est constitué d'une barre s'étendant verticalement entre le plancher et le plafond de l'habitacle et sur laquelle sont montés en partie haute de la barre, les moyens de suspension et en partie basse de la barre les moyens de blocage. L'orientation des moyens de maintien permet alors de définir l'orientation du plan vertical dans lequel s'étend le vélo suspendu, par rapport à une paroi latérale, de préférence longitudinale, de la voiture. On peut ainsi prévoir une installation de montants verticaux alignés avec un certain écart de la paroi, les moyens de maintien selon leur orientation permettant de suspendre verticalement des vélos perpendiculairement, obliquement ou parallèlement à cette paroi. De plus, les montants utilisés ou non peuvent servir de barres de maintien.

Deux montants s'étendent transversalement, de préférence parallèles l'un à l'autre, depuis le montant vertical jusqu'à la paroi de l'habitacle pour définir entre eux une surface plane formant le deuxième plan vertical.

Selon un deuxième mode de réalisation de l'invention, le montant du dispositif de rangement est un montant en forme de U, dont l'âme centrale s'étend verticalement dans l'habitacle et les extrémités des branches sont fixées sur une paroi latérale de la voiture. De manière avantageuse, le dispositif de rangement définit ainsi entre les branches parallèles du montant en forme de U une surface, essentiellement plane sur au moins une partie ou la totalité de la hauteur entre les branches du montant et formant le deuxième plan vertical.

La surface plane formant le deuxième plan vertical peut alors porter des moyens de support, ou de retenue, pour accueillir un objet de mobilité urbaine tel qu'une trottinette. Il est également envisageable de prévoir d'autres moyens de support permettant par exemple de ranger des skis, planche de surf et autres objets de ce type. Selon une forme de réalisation préférée, ces moyens de support peuvent être fixés de manière amovible sur la surface plane de manière à pouvoir être changés et adaptés aux besoins saisonniers (support de skis, support de planche de surf dans des trains grandes lignes par exemple) ou aux besoins locaux (support de trottinette pour des transports urbains tel que des trams).

Cette surface plane peut également être pourvue d'un siège, en particulier rabattable, fixé à la surface plane.

De manière avantageuse, on peut prévoir également que le montant en forme de U présente ses extrémités de branches fixées pivotantes sur une paroi latérale de la voiture, de telle sorte que le dispositif de rangement peut être rabattu en cas de non utilisation, contre la paroi, libérant ainsi l'espace dans la voiture. En outre, si la surface plane porte un siège rabattable celui-ci peut être alors utilisé facilement.

L'invention concerne également une voiture comprenant plusieurs dispositifs de rangement selon l'invention alignés le long d'une paroi latérale longitudinale de la voiture, en particulier parallèles entre-eux.

L'invention concerne également un véhicule ferroviaire, en particulier de type train ou tram, comprenant au moins une voiture ferroviaire selon l'invention telle que précédemment décrite.

### Description des figures et modes de réalisation

D'autres avantages et caractéristiques apparaîtront à l'examen de la description détaillée d'un mode de réalisation nullement limitatif, et des figures annexées qui représentent :
[FIG. 1] une représentation schématique d'un dispositif de rangement d'un vélo dans une voiture ferroviaire selon un premier mode de réalisation de l'invention ;
[FIG. 2A] une représentation schématique d'une vue du dessus d'un montant selon la figure 1 positionné par rapport à une paroi latérale longitudinale d'une voiture selon une première orientation des moyens de maintien ;
[FIG. 2B] une représentation schématique d'une vue du dessus d'une installation de dispositifs de rangement selon la figure 2A dans une voiture ferroviaire ;
[FIG. 3A] une représentation schématique d'une vue du dessus d'un montant selon la figure 1 positionné par rapport à une paroi latérale longitudinale d'une voiture selon une deuxième orientation des moyens de maintien ;
[FIG. 3B] une représentation schématique d'une vue du dessus d'une installation de dispositifs de rangement selon la figure 3A dans une voiture ferroviaire ;
[FIG. 4A] une représentation schématique d'une vue du dessus d'un montant selon la figure 1 positionné par rapport à une paroi latérale longitudinale d'une voiture selon une troisième orientation des moyens de maintien ;
[FIG. 4B] une représentation schématique d'une vue du dessus d'une installation de dispositifs de rangement selon la figure 4A dans une voiture ferroviaire ;
[FIG. 5] une représentation schématique d'une vue en perspective latérale d'un dispositif de rangement de vélo selon un deuxième mode de réalisation de l'invention ;
[FIG. 6] une représentation schématique d'une variante du dispositif de la figure 5, vu en perspective latérale;
[FIG. 7] une vue en perspective latérale d'une voiture selon l'invention ; et
[FIG. 8] une vue en perspective latérale de la voiture de la figure 7 vue de l'autre côté.

Sur les figures les éléments communs à plusieurs figures conservent la même référence.

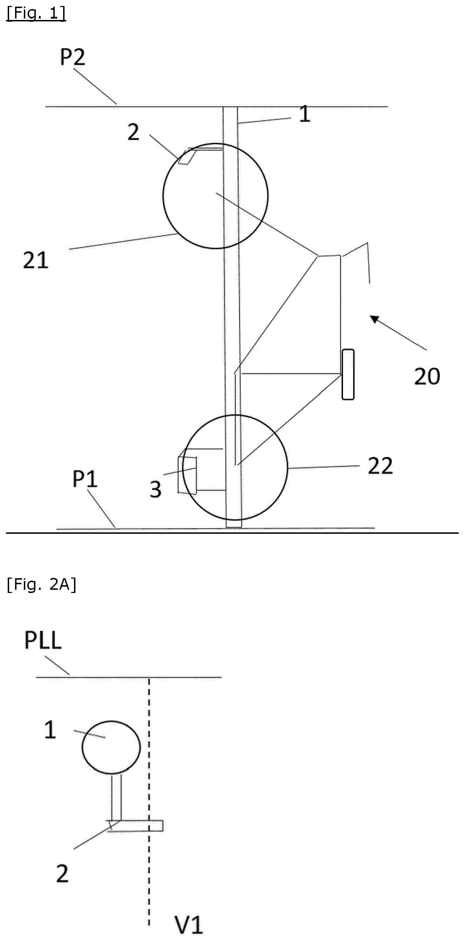

Comme on peut le voir à la figure 1, le dispositif de rangement pour vélo selon l'invention comprend un montant vertical 1 constitué ici d'un mât destiné à s'étendre entre le plancher P1 et le plafond P2 d'une voiture ferroviaire. Ce mât 1 comprend des moyens de maintien d'un vélo 20 permettant le rangement vertical dudit vélo 20. Ainsi, les moyens de maintien sont constitués d'un moyen de suspension tel qu'un crochet 2 engageable sur la roue avant 21 du vélo 20 et se trouvant en partie supérieure du mât 1, côté plafond P2. Des moyens de blocage 3 de la roue arrière 22 sont eux prévus en partie inférieure du mât 1, côté plancher P1.

L'utilisateur lève la partie avant du vélo 20 de sorte que la roue avant 21 puisse être engagée sur le crochet 2. Le vélo 20 ainsi suspendu dans un plan vertical V1 est maintenu avec sa roue arrière 22 engagée sur les moyens de blocage 3 pour éviter tout balancement horizontal. Le vélo 20 s'étend ainsi de sa roue avant 21 à sa roue arrière 22 dans un plan essentiellement vertical V1, son axe longitudinal étant vertical.

Comme on peut le voir sur les figures 2A, 3A et 4A, l'orientation des moyens de maintien 2, 3 par rapport à une paroi latérale de la voiture ferroviaire, ici une paroi latérale longitudinale PLL, dans laquelle est implantée le dispositif de rangement permet de définir l'orientation du plan vertical V1 dans lequel s'étend le vélo 20 par rapport à cette paroi PLL.

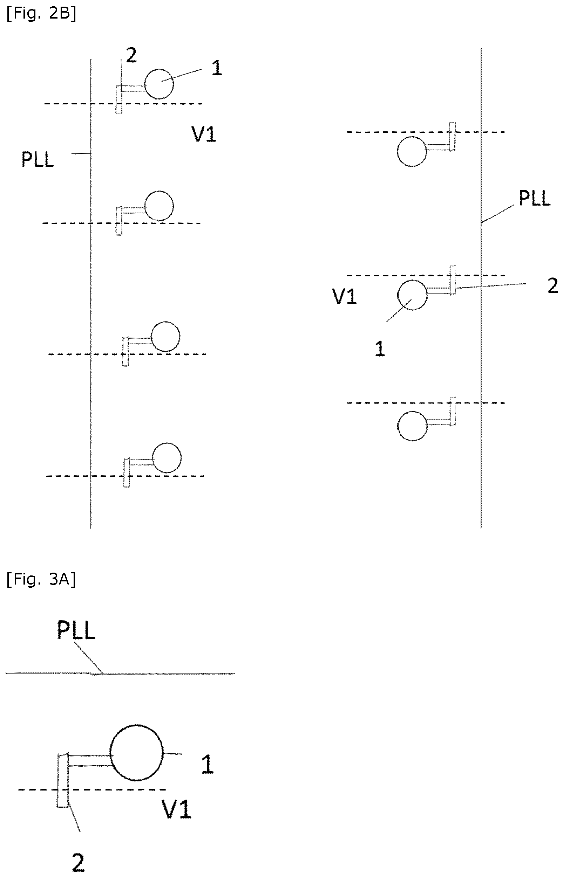

Ainsi, comme on peut le voir à la figure 2A, le plan V1 peut s'étendre perpendiculaire à la paroi PLL. Une voiture ferroviaire selon l'invention pourra alors comporter une pluralité de mâts 1 implantés le long d'une ou des deux parois PLL avec les moyens de maintien 2, 3 définissant un plan vertical V1 tel que représenté à la figure 2B. De plus, lorsque des dispositifs ne sont pas utilisés le mât 1 peut servir de barre de maintien pour des passagers restant debout dans la voiture.

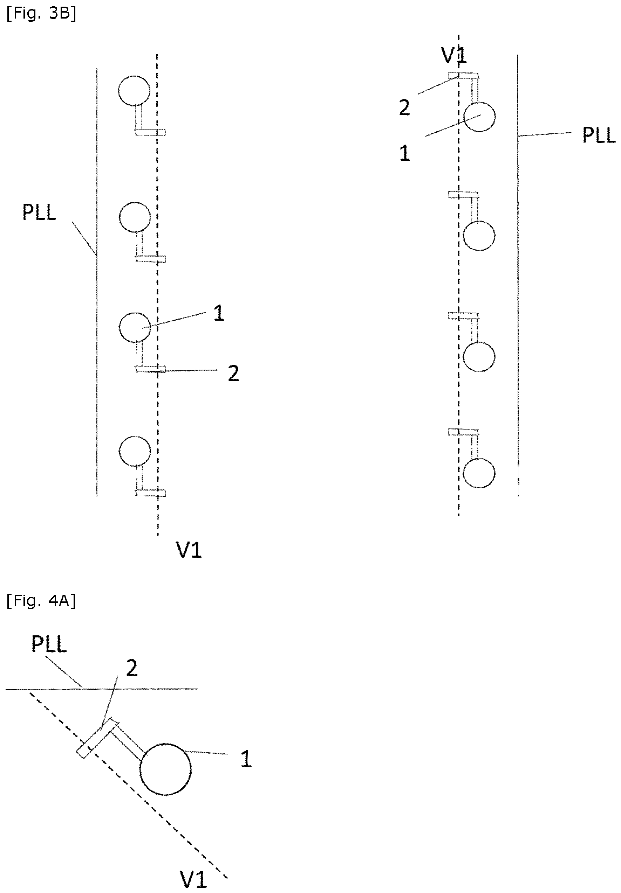

Comme cela est visible à la figure 3B, le mât 1 est implanté avec les moyens de maintien 2, 3 définissant un plan vertical V1 parallèle à la paroi latérale longitudinale PLL, donnant lieu ainsi à une implantation dans une voiture ferroviaire le long de chaque paroi PLL tel que représenté à la figure 3B. Une telle implantation des mâts 1 et orientation des moyens de maintien 2, 3 permet avantageusement de libérer l'espace central de la voiture ferroviaire pour permettre une circulation des usagers même lorsque l'ensemble des structures de rangement sont utilisées. Là également, lorsque des dispositifs ne sont pas utilisés, le mât 1 peut servir de barre de maintien pour des passagers restant debout dans la voiture.

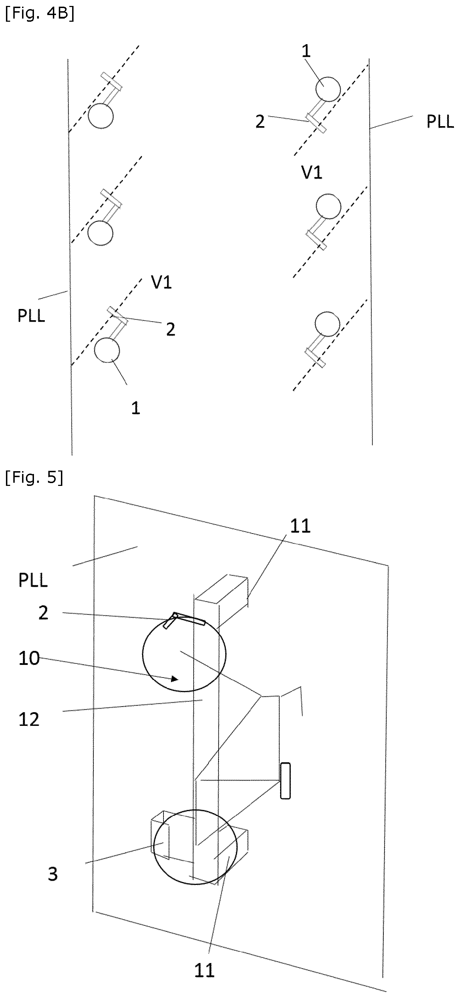

Sur les figures 4A et 4B, l'orientation des moyens de maintien 2, 3 de chaque mât 1 permet de définir un plan vertical V1 oblique par rapport à la paroi PLL. Une telle configuration en oblique est particulièrement avantageuse pour une mise en place aisée des vélos.

La figure 5 est une vue en perspective latérale d'un deuxième mode de réalisation d'un dispositif de rangement selon l'invention. On peut ainsi voir un dispositif de rangement pour vélo qui comporte un montant 10 qui présente une forme de U. Ce montant 10 est fixé aux extrémités de ces branches 11 sur la paroi PLL de la voiture tandis que l'âme centrale 12 du U s'étend verticalement dans l'habitacle.

Sur le montant vertical 12 sont prévus les moyens de maintien 2, 3 d'un vélo. Ces moyens de maintien sont constitués d'un crochet 2 dans la partie supérieure du montant 12 sur lequel la roue avant 21 d'un vélo 20 peut être accrochée tandis qu'en partie inférieure du montant 12, sont prévus des moyens de blocage 3 de la roue arrière 22. Les moyens de blocage peuvent être formé d'une bande de tôle 31 qui s'étend en saillie du montant 12 et présente une forme en U à son extrémité 32, la roue arrière 22 pouvant s'engager dans le U pour y être bloquée.

Une fois la roue avant 21 du vélo 20 engagée sur le crochet 2, et la roue arrière 22 bloquée, le vélo 20 s'étend dans un plan essentiellement vertical V1.

Selon un mode de réalisation préféré, entre les branches 11 du montant 10 est mise en place une surface plane tel qu'un panneau 13 pouvant porter divers accessoires tels que des moyens de retenue 14 d'autres objets de mobilité urbaine comme par exemple des trottinettes.

Le montant 10 peut être fixé sur la paroi PLL avec ses branches 11 s'étendant perpendiculairement à la paroi PLL comme cela est visible à la figure 5.

En variante, le montant 10 peut être fixé de sorte que les branches 11 s'étendent de manière oblique par rapport à la paroi PLL. Le montant 10 s'étend dans un deuxième plan vertical V2 oblique par rapport à la paroi PLL. L'orientation des moyens de maintien 2, 3 permet également de définir l'orientation du plan vertical V1 du vélo 20 par rapport à ladite paroi PLL et par rapport au plan V2 du montant 10, le cas échéant.

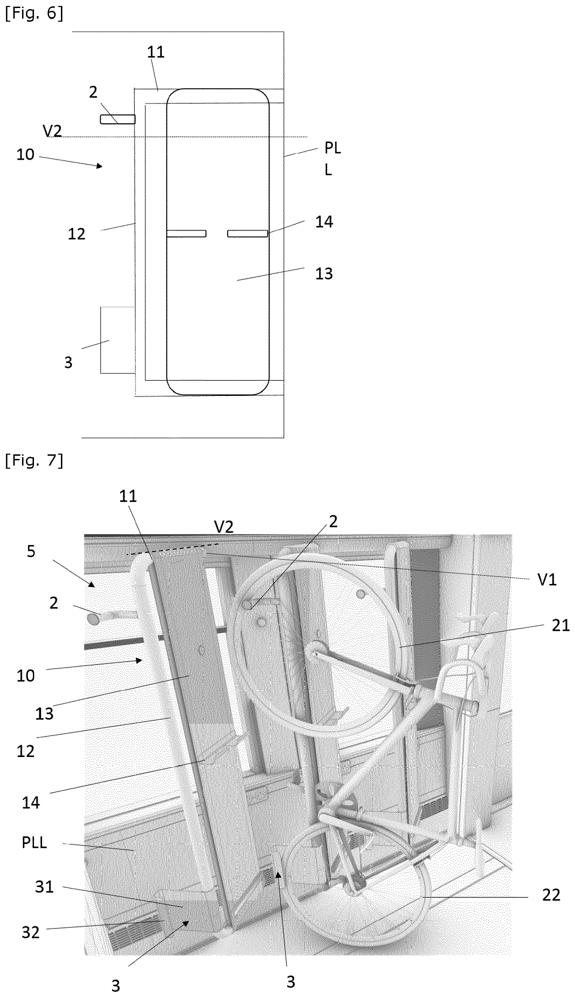

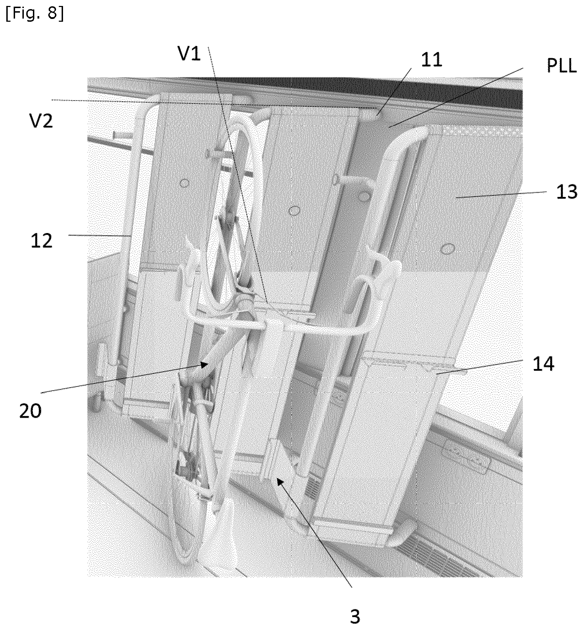

Les figures 7 et 8 représentent une voiture selon l'invention dans laquelle le montant 10 du dispositif de rangement s'étend selon un plan vertical oblique V2 par rapport à la paroi PLL. Cette paroi PLL comporte des ouvertures telles que des fenêtres 5. Les moyens de maintien 2, 3 sont orientés sur le montant 10 de manière à définir un plan vertical V1 de rangement du vélo 20. Les plans verticaux V1 et V2 sont perpendiculaires l'un à l'autre et obliques par rapport à la paroi PLL. Comme on peut le voir, les moyens de maintien 2, 3 sont en retrait par rapport au centre de l'habitacle de la voiture, évitant ainsi de se trouver en saillie dans le passage des usagers. Le dispositif de rangement présente également des moyens de retenue 14 d'une trottinette.

L'espace entre deux dispositifs de rangement peut également servir au stockage de bagages.

## Revendications

1. Dispositif de rangement de vélo agencé pour maintenir un vélo (20), en position verticale, comprenant un montant vertical (1, 10) sur lequel sont montés des moyens de maintien (2, 3) du vélo (20) avec son axe longitudinal en position verticale dans un premier plan vertical (V1), **caractérisé en ce que** le dispositif de rangement présente une surface plane définissant un deuxième plan vertical (V2), permettant de servir de support pour le rangement d'autres objets, le montant vertical (1, 10) du dispositif présentant deux montants s'étendant transversalement dans un même plan vertical depuis le montant vertical (1, 10) pour définir entre eux la surface plane formant le deuxième plan vertical (V2).

2. Dispositif selon la revendication 1, **caractérisé en ce que** le deuxième plan vertical (V2) est oblique ou perpendiculaire au premier plan vertical (V1).

3. Dispositif selon l'une des revendications 1 ou 2, **caractérisé en ce que** les moyens de maintien comprennent des moyens de suspension (2) positionnés dans la partie supérieure du montant vertical (1, 10) et sur lesquels est engageable une roue (21) du vélo (20) qui se retrouve alors suspendu et s'étend verticalement, ainsi que des moyens de blocage (3), positionnés en partie inférieure du montant vertical (1, 10), pour bloquer l'autre roue (22) du vélo et retenir ledit vélo (20) dans un plan horizontal.

4. Dispositif selon la revendication 3, **caractérisé en ce que** le montant vertical est constitué d'un mât (1) s'étendant verticalement depuis un socle et sur lequel sont montés en partie haute du mât (1), les moyens de suspension (2) et en partie basse du mât (1) les moyens de blocage (3).

5. Dispositif selon l'une des revendications 1 à 3, **caractérisé en ce que** le montant vertical (10) est constitué d'un montant en forme de U, dont l'âme centrale (12) s'étend verticalement et les extrémités des branches (11) sont destinées à être fixées sur une paroi verticale d'accueil.

6. Dispositif selon la revendication 5, **caractérisé en ce que** les branches du montant en forme de U constituent les deux montants s'étendant transversalement et définissent entre elles la surface plane sur au moins une partie de la hauteur, formant le deuxième plan vertical (V2).

7. Voiture ferroviaire comprenant un habitacle et au moins un dispositif de rangement de vélo selon la revendication 1, disposé dans ledit habitacle, et agencé pour maintenir un vélo (20) avec son axe longitudinal en position verticale, le montant vertical (1, 10) du dispositif s'étendant verticalement dans ledit habitacle.

8. Voiture ferroviaire selon la revendication 7, **caractérisée en ce que** les moyens de maintien (2, 3) portés par le montant vertical sont orientés dans l'habitacle pour positionner le vélo (20) dans le premier plan vertical (V1) qui est parallèle, oblique ou perpendiculaire par rapport à une paroi latérale dudit habitacle.

9. Voiture ferroviaire selon la revendication 8, **caractérisée en ce que** la surface plane formant le deuxième plan vertical (V2) est oblique ou perpendiculaire par rapport à la paroi latérale de l'habitacle, et oblique ou perpendiculaire au premier plan vertical (V1).

10. Voiture ferroviaire selon l'une quelconque des revendications 7 à 9, **caractérisée en ce que** le montant vertical du dispositif de rangement est constitué d'un mât (1) s'étendant verticalement entre le plancher et le plafond de l'habitacle.

11. Voiture ferroviaire selon la revendication 7, **caractérisée en ce que** le montant vertical est un montant (10) en forme de U, dont l'âme centrale (12) s'étend verticalement dans l'habitacle et les extrémités des branches (11) sont fixées sur une paroi latérale de l'habitacle.

12. Voiture ferroviaire selon l'une des revendications 10 ou 11, **caractérisée en ce que** la surface plane comporte au moins une forme de support, ou de retenue (14), pour accueillir un objet de mobilité urbaine tel qu'une trottinette.

13. Voiture ferroviaire selon l'une quelconque des revendications 7 à 12, **caractérisée en ce que** le dispositif de rangement comporte un siège, en particulier rabattable, fixé à la surface plane.

14. Voiture ferroviaire selon l'une quelconque des revendications 7 à 13, **caractérisée en ce qu'**elle comprend plusieurs dispositifs de rangement selon la revendication 1 alignés le long d'une paroi latérale longitudinale de la voiture, en particulier parallèles entre eux.

15. Véhicule ferroviaire, en particulier de type train, tram, comprenant au moins une voiture ferroviaire selon l'une quelconque des revendications 7 à 14.

## Patentansprüche

1. Fahrradaufbewahrungsvorrichtung zum Halten eines Fahrrads (20) in einer vertikalen Position, umfassend eine vertikale Säule (1, 10), an der Mittel (2, 3) zum Halten des Fahrrads (20) mit seiner Längsachse in einer vertikalen Position in einer ersten vertikalen Ebene (V1) montiert sind, **dadurch gekennzeichnet, dass** die Aufbewahrungsvorrichtung eine ebene Fläche aufweist, die eine zweite vertikale Ebene (V2) definiert, so dass sie als Stütze für die Aufbewahrung anderer Objekte dienen kann, wobei die vertikale Säule (1, 10) der Vorrichtung zwei Säulen aufweist, die sich in derselben vertikalen Ebene quer von der vertikalen Säule (1, 10) erstrecken, um dazwischen die ebene Fläche zu definieren, welche die zweite vertikale Ebene (V2) bildet.

2. Vorrichtung nach Anspruch 1, **dadurch gekennzeichnet, dass** die zweite vertikale Ebene (V2) schräg oder senkrecht zur ersten vertikalen Ebene (V1) verläuft.

3. Vorrichtung nach einem der Ansprüche 1 oder 2, **dadurch gekennzeichnet, dass** die Haltemittel Aufhängemittel (2) umfassen, die im Oberteil der vertikalen Säule (1, 10) positioniert sind und an denen ein Rad (21) des Fahrrads (20) befestigt werden kann, das dann aufgehängt ist und sich vertikal erstreckt, sowie Blockiermittel (3), die im Unterteil der vertikalen Säule (1, 10) positioniert sind, um das andere Rad (22) des Fahrrads zu blockieren und das Fahrrad (20) in einer horizontalen Ebene zu halten.

4. Vorrichtung nach Anspruch 3, **dadurch gekennzeichnet, dass** die vertikale Säule aus einem Mast (1) gebildet ist, der sich vertikal von einer Basis aus erstreckt und an dem im oberen Teil des Mastes (1) die Aufhängemittel (2) und im unteren Teil des Mastes (1) die Blockiermittel (3) montiert sind.

5. Vorrichtung nach einem der Ansprüche 1 bis 3, **dadurch gekennzeichnet, dass** die vertikale Säule (10) aus einer U-förmigen Säule gebildet ist, deren zentraler Kern (12) sich vertikal erstreckt und deren Enden der Schenkel (11) zur Befestigung an einer vertikalen Aufnahmewand vorgesehen sind.

6. Vorrichtung nach Anspruch 5, **dadurch gekennzeichnet, dass** die Schenkel der U-förmigen Säule die beiden querverlaufenden Säulen bilden und dazwischen die ebene Fläche über zumindest einen Teil der Höhe, welche die zweite vertikale Ebene (V2) bildet, definieren.

7. Schienenfahrzeugwagen, umfassend einen Fahrgastraum und mindestens eine Fahrradaufbewahrungsvorrichtung nach Anspruch 1, die in dem Fahrgastraum angeordnet ist und dazu dient, ein Fahrrad (20) mit seiner Längsachse in einer vertikalen Position zu halten, wobei sich die vertikale Säule (1, 10) der Vorrichtung vertikal im Fahrgastraum erstreckt.

8. Schienenfahrzeugwagen nach Anspruch 7, **dadurch gekennzeichnet, dass** die von der vertikalen Säule getragenen Haltemittel (2, 3) im Fahrgastraum ausgerichtet sind, um das Fahrrad (20) in der ersten vertikalen Ebene (V1) zu positionieren, die parallel, schräg oder senkrecht zu einer Seitenwand des Fahrgastraums verläuft.

9. Schienenfahrzeugwagen nach Anspruch 8, **dadurch gekennzeichnet, dass** die ebene Fläche, welche die zweite vertikale Ebene (V2) bildet, schräg oder senkrecht zur Seitenwand des Fahrgastraums und schräg oder senkrecht zur ersten vertikalen Ebene (V1) verläuft.

10. Schienenfahrzeugwagen nach einem der Ansprüche 7 bis 9, **dadurch gekennzeichnet, dass** die vertikale Säule der Aufbewahrungsvorrichtung aus einem Mast (1) gebildet ist, der sich vertikal zwischen dem Boden und der Decke des Fahrgastraums erstreckt.

11. Schienenfahrzeugwagen nach Anspruch 7, **dadurch gekennzeichnet, dass** die vertikale Säule eine U-förmige Säule (10) ist, deren zentraler Kern (12) sich vertikal im Fahrgastraum erstreckt und die Enden der Schenkel (11) an einer Seitenwand des Fahrgastraums befestigt sind.

12. Schienenfahrzeugwagen nach einem der Ansprüche 10 oder 11, **dadurch gekennzeichnet, dass** die ebene Fläche mindestens eine Art von Stütze oder Halterung (14) zur Aufnahme eines städtischen Mobilitätsobjekts, beispielsweise eines Tretrollers, umfasst.

13. Schienenfahrzeugwagen nach einem der Ansprüche 7 bis 12, **dadurch gekennzeichnet, dass** die Aufbewahrungsvorrichtung einen auf der ebenen Fläche befestigten Sitz, insbesondere klappbar, umfasst.

14. Schienenfahrzeugwagen nach einem der Ansprüche 7 bis 13, **dadurch gekennzeichnet, dass** er mehrere Aufbewahrungsvorrichtungen nach Anspruch 1 umfasst, die entlang einer Längsseitenwand des Wagens ausgerichtet sind, insbesondere parallel zueinander.

15. Schienenfahrzeug, insbesondere vom Typ Zug, Straßenbahn, umfassend mindestens einen Schienenfahrzeugwagen nach einem der Ansprüche 7 bis 14.

## Claims

1. Bicycle storage device arranged to hold a bicycle (20), in a vertical position, comprising a vertical post (1, 10) on which are mounted means (2, 3) for holding the bicycle (20) with its longitudinal axis in a vertical position in a first vertical plane (V1), **characterized in that** the storage device has a flat surface defining a second vertical plane (V2), enabling it to be used as a support for storing other objects, the vertical post (1, 10) of the device having two posts extending transversely in the same vertical plane from the vertical post (1, 10) in order to define between them the flat surface forming the second vertical plane (V2).

2. Device according to claim 1, **characterized in that** the second vertical plane (V2) is oblique or perpendicular to the first vertical plane (V1).

3. Device according to one of claims 1 or 2, **characterized in that** the holding means comprise suspension means (2) which are positioned in the upper part of the vertical post (1, 10) and on which a wheel (21) of the bicycle (20) can be engaged, which is then suspended and extends vertically, and locking means (3), which are positioned on the lower part of the vertical post (1, 10), for locking the other wheel (22) of the bicycle and retaining said bicycle (20) in a horizontal plane.

4. Device according to claim 3, **characterized in that** the vertical post consists of a pole (1) extending vertically from a base and on which suspension means (2) are mounted on the top part of the pole (1) and locking means (3) are mounted on the bottom part of the pole (1).

5. Device according to one of claims 1 to 3, **characterized in that** the vertical post (10) consists of a U-shaped post, the central web (12) of which extends vertically and the ends of the arms (11) of which are intended to be attached to a vertical receiving wall.

6. Device according to claim 5, **characterized in that** the arms of the U-shaped post form the two transversely extending posts and define between them the flat surface over at least part of the height, forming the second vertical plane (V2).

7. Railway car comprising a passenger compartment and at least one bicycle storage device according to claim 1, placed in said passenger compartment, and arranged to hold a bicycle (20) with its longitudinal axis in a vertical position, the vertical post (1, 10) of the device extending vertically in said passenger compartment.

8. Railway car according to claim 7, **characterized in that** the holding means (2, 3) supported by the vertical post are oriented in the passenger compartment to position the bicycle (20) in the first vertical plane (V1) which is parallel, oblique or perpendicular to a side wall of said passenger compartment.

9. Railway car according to claim 8, **characterized in that** the flat surface forming the second vertical plane (V2) is oblique or perpendicular to the side wall of the passenger compartment, and oblique or perpendicular to the first vertical plane (V1).

10. Railway car according to any one of claims 7 to 9, **characterized in that** the vertical post of the storage device consists of a pole (1) extending vertically between the floor and the ceiling of the passenger compartment.

11. Railway car according to claim 7, **characterized in that** the vertical post is a U-shaped post (10), the central web (12) of which extends vertically in the passenger compartment and the ends of the arms (11) of which are attached to a side wall of the passenger compartment.

12. Railway car according to one of claims 10 or 11, **characterized in that** the flat surface comprises at least one support or retaining means (14) for accommodating an urban mobility item such as a scooter.

13. Railway car according to any one of claims 7 to 12, **characterized in that** the storage device comprises a seat, in particular a fold-down seat, attached to the flat surface.

14. Railway car according to any one of claims 7 to 13, **characterized in that** it comprises several storage devices according to claim 1 which are aligned along a longitudinal side wall of the car, in particular parallel to one another.

15. Railway vehicle, in particular a train or streetcar, comprising at least one railway car according to any one of claims 7 to 14.
